# EUROPÄISCHE PATENTSCHRIFT

(11) **EP 0 996 267 B1**
(45) Veröffentlichungstag und Bekanntmachung des Hinweises auf die Patenterteilung: **03.09.2008**
(21) Anmeldenummer: 99119786.4
(22) Anmeldetag: 06.10.1999
(51) Int. Cl.: H04M 1/00, H04B 1/38, G08G 1/09

(54) **Schnittstelleneinrichtung**
Interface device
Dispositif d'interface

(30) Priorität: 22.10.1998 DE 19848791
(43) Veröffentlichungstag der Anmeldung: 26.04.2000
(73) Patentinhaber: Nokia Corporation, 02150 Espoo (FI)
(72) Erfinder: Görtz, Udo, 44797 Bochum (DE); Theimer, Wolfgang, 44795 Bochum (DE); Salomäki, Ari, 44866 Bochum (DE)
(74) Vertreter: Becker Kurig Straus

(56) Entgegenhaltungen:
- US-A- 5 479 479
- US-A- 5 794 164
- RUEHL ET AL: "SPS51 - A UNIVERSAL INTERFACE FOR HANDS-FREE TELEPHONY, SPEECH RECOGNITION AND SPEECH STORAGE IN THE CAR TELEPHONE" PHILIPS TELECOMMUNICATION REVIEW, PHILIPS TELECOMMUNICATIE INDUSTRIE N.V. HILVERSUM, NL, Bd. 48, Nr. 4, 1. Dezember 1990 (1990-12-01), Seiten 1-9, XP000178585

## Beschreibung

Die Erfindung betrifft eine Schnittstelleneinrichtung zur Informationsübertragung zwischen Eingabe/Ausgabemitteln und Anwendungsgeräten in einem Informations- und/oder Kommunikationssystem.

Informations- und/oder Kommunikationssysteme, wie sie insbesondere in Fahrzeugen verwendet werden, besitzen Benutzerschnittstellen, um einen Dialog zwischen dem Benutzer und den Anwendungsgeräten dieses Systems zu ermöglichen. Anwendungsgeräte sind bei derartigen Systemen z.B. Radios, CD-Plattenspieler, Kassettenrekorder, Mobiltelefone, aber auch Navigationseinrichtungen und -systeme sowie Bordcomputer, Diagnosesysteme und dergleichen. Zur Ein- und Ausgabe von Informationen, insbesondere zum Einstellen und Bedienen der einzelnen Anwendungsgeräte, weisen die Benutzerschnittstellen je nach Komfort Drehsteller, Tasten und/oder Druckknöpfe mit speziell zugeordneten Funktionen, alphanumerische Tastaturen, Auswahltasten, und/oder Spracheingabemittel zur Eingabe von Sprachbefehlen, Buchstaben und Zahlen oder einzelnen Wörtern auf. Ausgabemittel der Benutzerschnittstelle umfassen beispielsweise optische Anzeigemittel, wie z.B. Leuchtdioden- oder Flüssigkristallanzeigen oder graphische Bildschirme, wie sie z.B. für die Wiedergabe von Videobildern geeignet sind. Daneben können auch Ansagemittel zur akustischen Ausgabe von Information sowie haptische Ausgabemittel vorgesehen sein, die bei der Bedienung von Drehstellern und Druckknöpfen eine fühlbare Rückmeldung über die Ausführung von Bedienfunktionen liefern.

Um bei gegebenen Eingabe/Ausgabemitteln den Dialog zwischen dem Benutzer und einem Anwendungsgerät zu ermöglichen, muß das jeweilige Anwendungsgerät eine Eingabe/Ausgabeschnittstelle aufweisen, die Eingabe und Ausgabeinformationen oder -daten entsprechend den Möglichkeiten und Eigenschaften der Eingabe/Ausgabemittel verarbeitet.

Es ist daher erforderlich, ein und dasselbe Anwendungsgerät mit verschiedenen Eingabe/Ausgabeschnittstellen auszurüsten, wenn es mit verschiedenen Eingabe/Ausgabemitteln verwendet werden soll. Ein weiterer Nachteil besteht darin, daß die Eingabe/Ausgabeschnittstelle eines speziellen Anwendungsgeräts wiederum neu konzipiert werden muß, wenn das entsprechende Anwendungsgerät mit neuen, verbesserten Eingabe/Ausgabemitteln einer Benutzerschnittstelle verwendet werden soll.

Aus der DE 196 25 002 A1 ist ein Kommunikationssystem für Kraftfahrzeuge bekannt, das einen zentralen Fahrzeugrechner und eine Anzahl peripherer Einrichtungen zum Senden, Empfangen, Feststellen und/oder Verarbeiten von Daten für telematische Anwendungen aufweist, die von dem Zentralrechner ausgeführt werden. Die peripheren Einrichtungen sind dabei mit dem Zentralrechner über wenigstens einen Datenkanal und zugeordnete Schnittstellen verbunden. Dabei wird eine adaptive Anwendungssteuerungunabhängigvon den telematischenAnwendugen bewirkt, die mit den letzteren über ein weiteres Datenformat kommuniziert, um für jede Anwendung, beispielsweise für eine Routenplanung, eine Ferndiagnose oder Diebstahlsschutz die erforderliche Einrichtung, also beispielsweise RDS-Radio, GSM-Mobiltelefon, GPS-Empfänger, und die geeignete Schnittstelle, wie beispielsweise Infrarotschnittstelle, Steckverbinder oder PCMCIA-Steckplatz, flexibel auswählen zu können.

Auch bei diesem Kommunikationssystem müssen die einzelnen Anwendungsgeräte, also das RDS-Radio oder das GSM-Mobiltelefon oder die GPS-Einheit Eingabe/Ausgabeschnittstellen aufweisen, die mit den im jeweiligen Kraftfahrzeug vorhandenen Eingabe/Ausgabemitteln der Benutzerschnittstelle Daten austauschen können.

US-A-5 479 479 beschreibt eine Kontrolleinheit, an die ein Mobiltelefon angeschlossen werden kann, um von anderen Geräten Informationen über eine Mobilverbindung zu übertragen bzw. zu empfangen. Die Kontrolleinheit erkennt den Telefontyp und passt die Kommunikation entsprechend an.

US-A-5 794 164 beschreibt ein Fahrzeugcomputersystem, welches verschiedene vom Benutzer bereitgestellte Anwendungen unterstützt.

Der Erfindung liegt die Aufgabe zugrunde, eine Schnittstelleneinrichtung bereitzustellen, die es ermöglicht, daß Anwendungsgeräte mit verschiedensten Eingabe/Ausgabemitteln einer Benutzerschnittstelle verwendet werden können, ohne daß die Eingabe/Ausgabeschnittstelle der Anwendungsgeräte geändert werden muß.

Diese Aufgabe wird durch die Schnittstelleneinrichtung nach Anspruch 1 gelöst. Vorteilhafte Weiterbildungen und Ausgestaltungen der Erfindung sind in den Unteransprüchen beschrieben.

Die Erfindung wird im folgenden beispielsweise anhand der Zeichnung näher erläutert. Es zeigen:
**Fig. 1** ein vereinfachtes schematisches Blockschaltbild eines Informations- und/oder Kommunikationssystems mit der erfindungsgemäßen Schnittstelleneinrichtung.
**Fig. 2** ein vereinfachtes schematisches Blockschaltbild eines Informations- und/oder Kommunikationssystems, bei dem die Schnittstelleneinrichtung mehr im einzelnen dargestellt ist,
**Fig. 3** ein vereinfachtes schematisches Blockschaltbild einer optischen Treiberschnittstelle in einer erfindungsgemäßen Schnittstelleneinrichtung,
**Fig. 4** ein vereinfachtes schematisches Blockschaltbild einer akustischen Treiberschnittstelle in einer erfindungsgemäßen Schnittstelleneinrichtung.

In den verschiedenen Figuren der Zeichnung sind einander entsprechende Bauteile mit gleichen Bezugszeichen versehen.

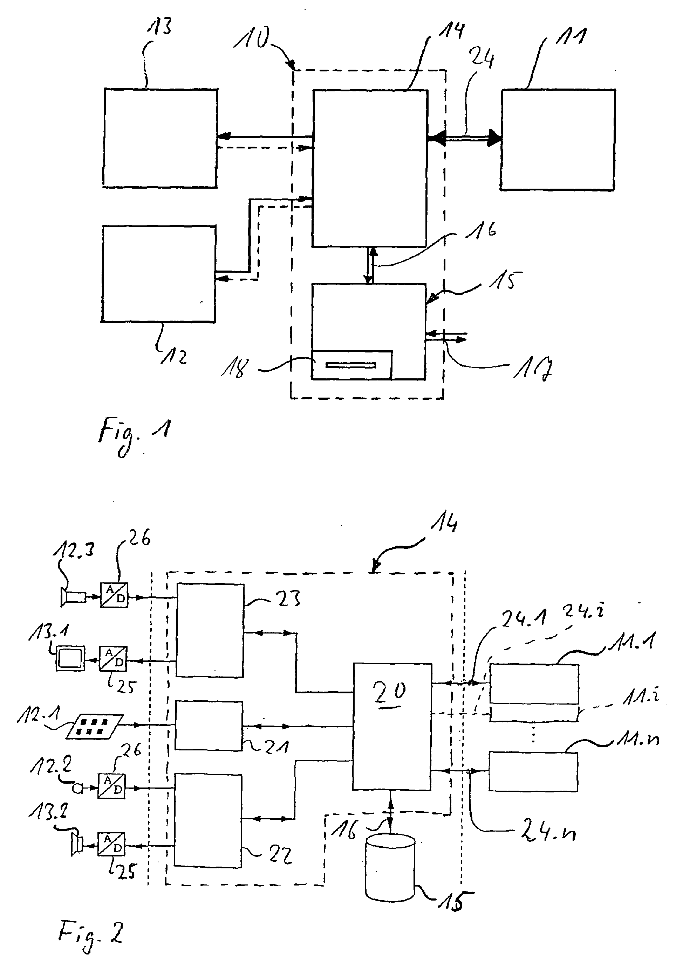

Wie in Figur 1 schematisch dargestellt, weist ein Informations- und/oder Kommunikationssystem, wie es insbesondere in Kraftfahrzeugen verwendet wird, erfindungsgemäß eine Schnittstelleneinrichtung 10 auf, die zur Informationsübertragung zwischen Anwendungsgeräte 11, von denen nur eines schematisch dargestellt ist, und Eingabemittel 12 sowie Ausgabemittel 13 geschaltet ist. Die Schnittstelleneinrichtung 10 umfaßt eine Schnittstellenschaltung 14 und eine damit verbundene Speichereinrichtung 15 für Systemdaten und Eingabe/Ausgabeformate und -strukturen. Neben einem Schreib-Lese-Zugang 16, über den die Speichereinrichtung 15 mit der Schnittstellenschaltung 14 verbunden ist, weist die Speichereinrichtung 15 einen weiteren Schreib-Lese-Zugang 17 auf, über den die in der Speichereinrichtung 15 gespeicherten Daten von außen aktualisiert werden können. Für die Aktualisierung oder Ergänzung der in der Speichereinrichtung 15 gespeicherten Daten und Informationen können, falls eines der angeschlossenen Anwendungsgeräte 11 ein Mobilfunkgerät oder -telefon ist, die entsprechenden Aktualisierungs- und Ergänzungsdaten über das Mobiltelefon, die Schnittstellenschaltung 14 und den Schreib-Lese-Zugang 16 in die Speichereinrichtung 15 geladen werden. Darüber hinaus kann die Speichereinrichtung 15 anstelle des Schreib-Lese-Zugangs 17 oder zusätzlich zu diesem eine Zugriffseinrichtung 18 auf ein auswechselbares Speichermittel aufweisen. Hier kann beispielsweise ein Speicherkartensteckplatz, ähnlich einem Smartcard-oder SIM-Card-Steckplatz, eine PCMCIA-Steckplatz oder auch ein CD-Laufwerk vorgesehen sein.

Wie Figur 2 zeigt, umfaßt die Schnittstellenschaltung 14 eine Strukturschnittstelle 20, die Benutzerseitig mit einer taktil/haptischen Treiberschnittstelle 21, einer Audio-Treiberschnittstelle 22 und einer Video-Treiberschnittstelle 23 verbunden ist. Anwendungsseitig ist die Strukturschnittstelle 20, die über den Schreib-Lese-Zugang 16 mit der Speichereinrichtung 15 verbunden ist, über Geräteschnittstellen 24.1, ... 24.n mit Anwendungsgeräten 11.1, ... 11.n verbunden.

Die taktil/haptische Treiberschnittstelle 21 dient in erster Linie zur Umsetzung von Eingabedaten, die über ein beispielsweise als Tastenfeld oder als Dreh-Drück-Steller oder als Kombination davon ausgelegtes taktil/haptisches Eingabemittel 12.1 eingegeben werden. Als bevorzugte Ausgabemittel sind ein Bildschirm 13.1 und ein Lautsprecher 13.2 vorgesehen, die über entsprechende Digital-Analog-Wandler 25 mit der Video- bzw. Audio-Treiberschnittstelle 23 bzw. 22 verbunden sind. Zur akustischen Eingabe von Daten, also zur Eingabe von Sprachbefehlen und anderen gesprochenen Informationen ist ein Mikrophon 12.2 als akustisches Eingabemittel vorgesehen, das über einen Analog-Digial-Wandler 26 mit der Audio-Treiberschnittstelle 22 verbunden ist. Zur optischen Eingabe von Informationen ist eine optische Empfängereinrichtung, beispielsweise eine Videokamera 12.3 vorgesehen, die über einen entsprechenden Analog-Digital-Wandler 26 mit der Video-Treiberschnittstelle 23 verbunden ist.

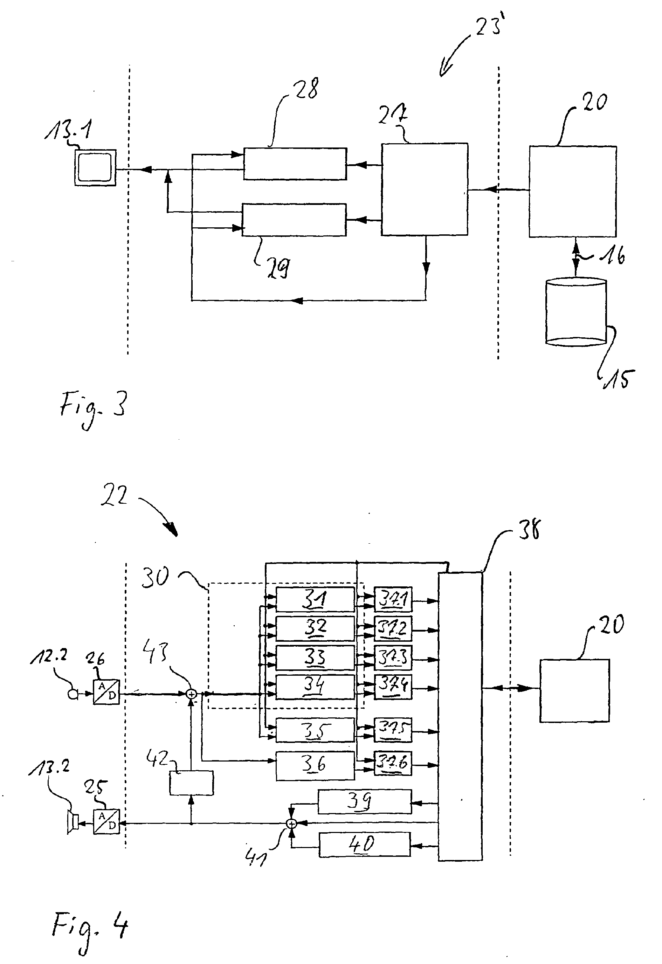

Figur 3 zeigt eine nur als Ausgabemittel dienende Video-Treiberschnittstelle 23', die eine Modusauswahlschaltung 27 aufweist, die von der Strukturschnittstelle 20 gelieferte Ausgabedaten zur Darstellung auf dem Bildschirm 13.1 an einen Video/Graphik-Umsetzer 28 und einen Bildgenerator 29 liefert. Dabei werden die zugeführten Ausgabedaten ausgewertet, um den Video/Graphik-Umsetzer 28 und den Bildgenerator 29 wahlweise zu aktivieren, so daß die Ausgabedaten entsprechend den Möglichkeiten des Bildschirms 13.1 angezeigt werden können.

Entsprechend Figur 4 weist eine Audio-Treiberschnittstelle 22 in ihrem Eingangskreis eine Lauschschaltung 30 mit einer Sprachbefehlerkennungsschaltung 31, einer Ziffernerkennungsschaltung 32, einer Buchstabenerkennungsschaltung 33 und einer auf Sprache ansprechenden Aktivierungsschaltung 34 auf. Das Eingangssignal vom Mikrophon 12.2 wird über den Analog-Digital-Wandler 26 außer an die Lauschschaltung 30 an eine Sprechererkennungsschaltung 35 und eine Tonhöhenerkennungsund Nachführschaltung 36 angelegt.

Die Ausgangssignale der Erkennungsschaltungen 31 bis 36 werden über nachgeschaltete Wandler 37.1 bis 37.6 an eine Steuerschaltung 38 angelegt, die die Erkennungsschaltungen 31 bis 36 in Abhängigkeit von den erforderlichen oder angeforderten Eingabeinformationen steuert und die entsprechenden Ausgangssignale der Wandler 37.1 bis 37.6 an die Strukturschnittstelle 20 weiterleitet.

Ausgabedaten werden von der Steuerschaltung 38 über einen Sprachgenerator 39 oder über einen Audio-Dekodierer 40 oder direkt an einen Signaladdierkreis 41 geliefert, dessen Ausgangssignal über einen Digital-Analog-Wandler 25 an den Lautsprecher 13.2 angelegt wird, so daß die Information zur Ansage kommt.

Um bei der Ansage von Informationen eine Fehlaktivierung des Eingangskreises der Audio-Treiberschnittstelle 22 zu verhindern, wird das Ausgangssignal vom Signaladdierkreis 41 über eine Echounterdrückungsschaltung 42 an einen im Eingangskreis gelegenen weiteren Signaladdierkreis 43 angelegt, so daß das vom Mikrophon 12.2 aufgenommene Echosignal unterdrückt wird.

Im folgenden wird der Betrieb der erfindungsgemäßen Schnittstelleneinrichtung innerhalb eines Informations- und/oder Kommunikationssystems erläutert.

Nach dem Einschalten des Systems stellt die Schnittstellenschaltung 14 zunächst fest, welche Eingabe/Ausgabemittel angeschlossen sind und speichert entsprechende, das System beschreibende Daten. Anstelle einer Abfrage nach jedem Einschalten kann auch vorgesehen sein, daß die entsprechenden Systemdaten einmal bei der ersten Inbetriebnahme der an die Schnittstelleneinrichtung 10 angeschlossenen Eingabe/Ausgabemittel 12, 13 erfaßt und in die Speichereinrichtung 15 direkt oder von außen, beispielsweise über den Schreib-Lese-Zugang 17, eingeschrieben werden. Ferner kann auch für eine entsprechende Systemkonfiguration die erforderliche Information auf einem Datenträger gespeichert sein, der in der Zugriffseinrichtung 18 der Speichereinrichtung 15 angeordnet wird.

In entsprechender Weise sind für die angeschlossenen Anwendungsgeräte Systemdaten sowie Eingabe/Ausgabeformate und -strukturen für jede mit den angeschlossenen Anwendungsgeräten 11 ausführbare Anwendung gespeichert.

Ist beispielsweise ein Navigationssystem 11.i als Anwendungsgerät 11 an die Schnittstelleneinrichtung 10 angeschlossen und will ein Benutzer sich zu einem bestimmten Ziel führen lassen, so fordert ihn das Navigationssystem 11.i zunächst auf, den Zielort einzugeben. Hierzu liefert das Navigationssystem 11.i eine Anweisungsmarke an die Strukturschnittstelle 20. Anhand der übertragenen Anweisungsmarke greift die Strukturschnittstelle dann auf einen entsprechenden Datensatz in der Speichereinrichtung 15 zu, der beispielsweise für die Zielorteingabeanforderung die gesamte Dialogstruktur mit den an den Benutzer auszugebenden Aufforderungen enthält. Entsprechend der Dialogstruktur steuert die Strukturschnittstelle 20 die entsprechenden Treiberschnittstellen 21, 22, 23 an. Eine Aufforderung "Zielort eingeben" kann dann beispielsweise mit Hilfe der Audio-Treiberschnittstelle 22 über den Lautsprecher 13.2 angesagt und gleichzeitig auf dem Bildschirm 13.1 angezeigt werden.

Hierbei liefert die Strukturschnittstelle 20 die anzuzeigende Information, also hier den Hinweis "Zielort eingeben" an die Video-Treiberschnittstelle 23, die dann den Bildschirm entsprechend seinem Auflösungsvermögen und Anzeigemöglichkeiten ansteuert. Die Benutzereingabe erfolgt dann beispielsweise akustisch über das Mikrophon 12.2 und die Audio-Treiberschnittstelle 22 oder über die Tastatur 12.1 und die taktiel/haptische Treiberschnittstelle 21. Sobald der Eingabedialog abgeschlossen ist, überträgt die Strukturschnittstelle 20 den Zielort in einem Datenformat, das vom Navigationssystem 11.i unmittelbar weiter verarbeitet werden kann. Steht für die Ausgabe von Eingabeanforderungen beispielsweise der Bildschirm 13.1 nicht zur Verfügung, da er vollständig zur Kontrolle der Eingabe oder für die Eingabe selbst benötigt wird, so wird die entsprechende Eingabeanforderung von der Strukturschnittstelle 20 nur über die Audio-Treiberschnittstelle 22 mittels des Lautsprechers 13.2 ausgegeben.

In entsprechender Weise erfolgt die Ausgabe von Fahrtrichtungsanweisungen des Navigationssystems 11.i. Auch hierbei wird wiederum lediglich eine Anweisungsmarke übertragen, die beispielsweise den Richtungshinweis "Weiter vorn, rechts einordnen" anzeigt. Aufgrund dieser Anweisungsmarke greift die Strukturschnittstelle 20 dann wiederum auf einen entsprechenden Datensatz zu, der beispielsweise die einzelnen Buchstaben dieser Anweisung sowie einen damit korrespondierenden Pfeil beschreibt. Die Buchstabenfolge kann dabei zur Erzeugung einer entsprechenden Ansage benutzt werden, während der Pfeil auf dem Bildschirm angezeigt wird.

In entsprechender Weise läßt sich auch ein als Anwendungsgerät 11 angeschlossenes Radio oder ein CD-Plattenspieler mit Hilfe der zur Verfügung stehenden Eingabe/Ausgabemittel 12, 13 über die Schnittstelleneinrichtung 10 bedienen.

Die Speichereinrichtung 15 der Schnittstelleneinrichtung 10 läßt sich darüber hinaus auch zum Speichern von benutzerspezifischen Daten einsetzen, die entweder über den Schreib-Lese-Zugang 17 direkt oder unter Benutzung der Eingabe/Ausgabemittel 12, 13 über die Schnittstellenschaltung 12 und den Schreib-Lese-Zugang 16 eingegeben werden können. Bei angeschlossenem Navigationssystem ist es beispielsweise möglich, daß die Adressenangaben für vom Benutzer häufig gewünschte Zielorte in der Speichereinrichtung 15 so gespeichert werden, daß darauf mit Hilfe einer entsprechenden Marke zugegriffen werden kann. Eine derartige Marke ist dabei zweckmäßigerweise ein den Zielort kennzeichnendes Stichwort.

Der Benutzer des Navigationssystems braucht dann nur die Stichwort-Marke eines gewünschten Zielorts einzugeben, um zu diesem geführt zu werden. Der vollständige Eingabedialog für die erforderlichen Adressenangaben läuft dann nur noch zwischen Navigationssystem und Strukturschnittstelle ab.

Ist als Anwendungsgerät ein Mobiltelefon an die Schnittstelleneinrichtung 10 angeschlossen, so kann deren Speichereinrichtung 15 ebenfalls zur Speicherung benutzerspezifischer Daten genutzt werden. Dabei ist es insbesondere möglich, häufig benötigte Telefonnummern, Adressinformationen und andere personenspezifische Daten unter dem Namen der jeweiligen Person in Form sogenannter Kontaktkarten abzuspeichern. Will der Benutzer nun eine bestimmte Person anrufen, so kann er mit Hilfe eines entsprechenden Suchdialogs, der nur zwischen der Strukturschnittstelle 20 der Schnittstelleneinrichtung 10 und dem Benutzer ausgeführt wird, die Liste der gespeicherten Namen (und damit die dazugehörigen Kontaktdaten) durchsuchen. Ist der gewünschte Gesprächspartner gefunden, so kann er sich die in Form einer Kontaktkarte gespeicherten Daten anzeigen lassen. Will er mit der entsprechenden Person telefonieren, so führt die Strukturschnittstelle einen entsprechenden Dialog mit dem Mobiltelefon aus, überträgt an dieses die zu wählende Telefonnummer und startet den Wählvorgang für den Aufbau der Gesprächsverbindung.

In Verbindung mit einem Navigationssystem ist es dabei ebenfalls denkbar, daß eine auf einer Kontaktkarte gespeicherte Adresse, sofern sie die benötigten Zielortangaben enthält, auch als Zielort für das Navigationssystem verwendet werden kann und mit Hilfe eines entsprechenden Dialogs zwischen der Strukturschnittstelle und dem Navigationssystem an dieses übertragen wird.

Erfindungsgemäß erfolgt die Ausgabe von Daten, also beispielsweise von Navigationsanweisungen, Eingabeaufforderungen, Systemrückmeldungen, Warnhinweisen und dergleichen in der Weise, daß ein Anwendungsprogramm eines Anwendungsgeräts 11 eine der auszugebenden Information entsprechende Anweisungmarke an ein Strukturprogramm der Strukturschnittstelle 20 übergibt. Das Strukturprogramm liest daraufhin die unter der Anweisungsmarke in der Speichereinrichtung 15 gespeicherten Daten und liefert diese an ein Treiberprogramm einer Treiberschnittstelle 21, 22, 23. Das Treiberprogramm seinerseits wählt für die jeweils zur Verfügung stehenden Eingabe/Ausgabemittel 12, 13 geeignete Steuerdaten anhand der der auszugebenden Information entsprechenden Daten aus, um in Abhängigkeit davon die Eingabe/Ausgabemittel zu steuern.

Umgekehrt werden die eingegebenen Signale von den Treiberschnittstellen 21, 22, 23 in entsprechende Informationsdaten umgesetzt, die dann in der Strukturschnittstelle 20 benutzt werden, um anhand von gespeicherten Eingabeformaten und -strukturen die eingegebenen Informationen in einer den Anweisungsmarken entsprechenden Form an die jeweilige Anwendung zu übertragen.

Erfindungsgemäß ist es also mit Hilfe der Schnittstelleneinrichtung möglich, jedes beliebige Anwendungsgerät, wie beispielsweise ein Navigationssystem, ein Mobiltelefon, ein Fahrzeugbetriebs- und Sicherheitsüberwachungssystem oder dergleichen an die jeweils zur Verfügung stehenden Eingabe/Ausgabemittel anzuschließen, ohne daß die Eingabe/Ausgabeschnittstellen der Anwendungsgeräte 11 verändert werden müssen. Hierzu ist es lediglich erforderlich, die für den Betrieb einer Benutzerschnittstelle erforderlichen Informationen in der Speichereinrichtung 15 zu speichern. Dies kann beispielsweise über einen gesonderten Datenträger in der Zugriffseinrichtung 18 oder durch direktes Einschreiben über einen der Schreib-Lese-Zugänge 16, 17 erfolgen.

Ein weiterer Vorteil besteht darin, daß auch neue Anwendungsprogramme in einfacher Weise mit einem bestehenden System genutzt werden können, da es lediglich erforderlich ist, die für ein derartiges neues Anwendungsprogramm benötigten Eingabe/Ausgabeformate und Dialogstrukturen in der Speichereinrichtung 15 zu speichern. Dieser Speicherung kann dabei beispielsweise über das für die neue Anwendung genutzte Anwendungsgerät 11 ausgeführt werden. Insbesondere ist es bei der gewünschten zusätzlichen Nutzung neuer Mobilfunkdienste möglich, die hierfür erforderlichen Format- und Strukturdaten bei der ersten Nutzung über das Mobilfunkgerät zu empfangen und in die Speichererinrichtung 15 einzuschreiben, so daß keine aufwendigen Anpassungsarbeiten durchgeführt zu werden brauchen.

## Patentansprüche

1. Schnittstelleneinrichtung (10) zur Informationsübertragung zwischen Eingabe/Ausgabemitteln (12, 13) und Anwendungsgeräten (11) in einem Informations-und/oder Kommunikationssystem, mit
- einer Schnittstellenschaltung (14) und
- einer mit der Schnittstellenschaltung (14) verbundenen Speichereinrichtung (15) für Systemdaten und Eingabe/Ausgabeformate und -strukturen aufweist;
wobei
- die Schnittstellenschaltung (14) zu übertragende Eingabe- bzw. Ausgabeinformationen entsprechend den gespeicherten Systemdaten in Abhängigkeit von den zur Verfügung stehenden Eingabe/Ausgabemitteln (12, 13) mit Hilfe der gespeicherten Eingabe/Ausgabeformate und - strukturen verarbeitet und an das jeweilige Anwendungsgerät (11) bzw. an die zur Verfügung stehenden Eingabe/Ausgabemittel (12, 13) ausgibt; und
- die Schnittstellenschaltung (14) eine mit der Speichereinrichtung (15) verbundene Strukturschnittstelle (20) aufweist, die über anwendungsseitige Geräteschnittstellen (24.1, ... 24.n) mit Anwendungsgeräten (11.1, ... 11.n) verbindbar ist und die über zumindest eine Treiberschnittstelle (21, 22, 23) mit den Eingabe/Ausgabemitteln (12, 13) verbindbar ist, wobei jede Treiberschnittstelle (21, 22, 23) Anpassungsmittel aufweist, mit denen die Ausgabe/Eingabeinformationen entsprechend den Eigenschaften der zugeordneten Eingabe/Ausgabemittel (12, 13) anpassbar sind.

2. Schnittstelleneinrichtung nach Anspruch 1, **dadurch gekennzeichnet, dass** die Speichereinrichtung (15) zumindest einen weiteren Schreib-Lese-Zugang (17) aufweist, über den weitere Informationen, insbesondere Systemdaten, Eingabe/Ausgabeformate und -strukturen sowie benutzerspezifische Daten, von außen einschreibbar und bereits gespeicherte Informationen aktualisierbar sind.

3. Schnittstelleneinrichtung nach Anspruch 1 oder 2, **dadurch gekennzeichnet, dass** die Speichereinrichtung (15) eine Zugriffseinrichtung (18) zum Lesen oder zum Lesen und Schreiben von Daten von bzw. auf einem auswechselbaren Speichermittel aufweist.

4. Schnittstelleneinrichtung nach Anspruch 1-3, **dadurch gekennzeichnet, dass** sowohl für optische und akustische als auch für taktil/haptische Eingabe/Ausgabemittel (12, 13) eine entsprechende Treiberschnittstelle (23, 22, 21) vorgesehen ist.

## Claims

1. An interface device (10) for transmitting information between input/output means (12, 13) and application units (11) in an information and/or communication system, having
- an interface circuit (14), and
- a storage device (15), connected to the interface circuit (14), for system data and input/output formats and structures; wherein
- the interface circuit (14) processes input and/or output information to be transmitted with the aid of the stored input/output formats and structures, in accordance with the stored system data as a function of the input/output means (12, 13) available, and outputs said information to the respective application unit (11) and/or to the input/output means (12, 13) available; and
- the interface circuit (14) comprises a structure interface (20), which is connected to the storage device (15), can be connected to application units (11.1, ... 11.n) via unit interfaces (24.1, ... 24.n) on the application side, and can be connected to the input/output means (12 13) via at least one driver interface (21, 22, 23), wherein each driver interface (21, 22, 23) comprises adaptation means with which the output/input information can be adapted in accordance with the properties of the assigned input/output means (12, 23).

2. An interface device according to Claim 1,
**characterised in that** the storage device (15) comprises at least one further write-read access (17) via which further information, in particular system data, input/output formats and structures as well as user-specific data, can be written in from outside, and information already stored can be updated.

3. An interface device according to Claim 1 or 2,
**characterised in that** the storage device (15) comprises an access device (18) for reading or for reading and writing data from or on an exchangeable storage means.

4. An interface device according to Claims 1-3,
**characterised in that** an appropriate driver interface (23, 22, 21) is provided both for optical and acoustic and for tactile/haptic input/output means (12, 13).

## Revendications

1. Dispositif d'interface (10) pour la transmission d'informations entre des moyens d'entrée/sortie (12, 13) et des équipements d'application (11) dans un système d'informations et/ou de communication, ce dispositif comportant
- un circuit d'interface (14) ; et
- un dispositif de mémoire (15) relié au circuit d'interface (14) pour des données système et présentant des formats et structures d'entrée/sortie ;
- le circuit d'interface (14) traitant des informations d'entrée et/ou de sortie à transférer en correspondance avec les données système en mémoire en fonction des moyens d'entrée/sortie (12, 13) disponibles à l'aide des formats et structures d'entrée/sortie en mémoire et les transmettant à l'équipement d'application (11) respectif et/ou aux moyens d'entrée/sortie (12, 13) disponibles ; et
- le circuit d'interface (14) présentant une interface de structure (20) reliée au dispositif de mémoire (15), laquelle interface peut être reliée par l'intermédiaire d'interfaces de périphériques du côté applicatif (24.1, ... 24.n) à des équipements d'application (11.1, ... 11.n) et laquelle peut être reliée par l'intermédiaire d'au moins une interface de gestionnaire de périphériques (21, 22, 23) aux moyens d'entrée/sortie (12,13), chaque interface de gestionnaire de périphériques (21, 22, 23) présentant des moyens d'adaptation, avec lesquels les informations d'entrée/sortie peuvent être adaptées en fonction des propriétés des moyens d'entrée/sortie (12, 13) associés.

2. Dispositif d'interface selon la revendication 1, **caractérisé en ce que** le dispositif de mémoire (15) présente au moins un deuxième accès en lecture-écriture (17), par l'intermédiaire duquel d'autres informations, en particulier des données système, des formats et structures d'entrée/sortie ainsi que des données spécifiques à l'utilisateur peuvent être enregistrées depuis l'extérieur et par l'intermédiaire duquel des données déjà en mémoire peuvent être mises à jour.

3. Dispositif d'interface selon les revendications 1 ou 2, **caractérisé en ce que** le dispositif de mémoire (15) présente un dispositif d'accès (18) pour la lecture ou bien la lecture et l'écriture de données à partir de et/ou dans un moyen de mémoire interchangeable.

4. Dispositif d'interface selon les revendications 1-3, **caractérisé en ce que** l'on prévoit, pour des moyens d'entrée/sortie optiques et acoustiques tout comme également tactiles/haptiques (12, 13), une interface de gestionnaire de périphériques (23, 22, 21) correspondante.
